# EUROPÄISCHE PATENTSCHRIFT

(11) **EP 4 062 735 B1**
(45) Veröffentlichungstag und Bekanntmachung des Hinweises auf die Patenterteilung: **21.05.2025**
(21) Anmeldenummer: 22163622.8
(22) Anmeldetag: 22.03.2022
(51) Int. Cl.: A01C 9/02

(54) **LEGEVORRICHTUNG UND LEGEMASCHINE**
LAYING DEVICE AND LAYING MACHINE
DISPOSITIF POUR PLANTER ET PLANTEURSE

(30) Priorität: 22.03.2021 DE 202021101467 U
(43) Veröffentlichungstag der Anmeldung: 28.09.2022
(73) Patentinhaber: Grimme Landmaschinenfabrik GmbH & Co. KG, 49401 Damme (DE)
(72) Erfinder: Rechtien, Jochen, 49088 Osnabrück (DE); Rechtien, Andreas, D-49401 Damme (DE); Böging, Michael, D-49424 Goldenstedt/Lutten (DE)
(74) Vertreter: Wischmeyer, André

(56) Entgegenhaltungen:
- EP-A1- 0 515 411
- DE-A1- 2 157 174
- DE-C- 335 396
- DE-C- 891 635
- DE-U1- 29 517 942

## Beschreibung

Die vorliegende Erfindung betrifft eine Legevorrichtung für eine Legemaschine für Hackfrüchte.

Des Weiteren betrifft die Erfindung eine Legemaschine mit einer vorbeschriebenen Legevorrichtung.

Im Stand der Technik ist eine Vielzahl von Legemaschinen bekannt. Beispielhaft sei auf die unter der Typenbezeichnung GL 32 F der Anmelderin auf den Markt gebrachte Legemaschine verwiesen.

In der DE 335 396 C ist eine Legevorrichtung für Hackfrüchte gezeigt, bei der über am Transportband ausgebildete Bolzen eine Rüttelbewegung einer Klappe bewirkt wird.

In der EP 0 515 411 A1 wird eine Kartoffellegemaschine gezeigt. Diese Kartoffellegemaschine umfasst eine Legeeinheit mit Kartoffelhubbechern und eine Führung am unteren Ende eines Fülltrichters, wobei sich die Führung bewegen kann zwischen einer geschlossenen Position und einer offenen Position.

Es ist Aufgabe der vorliegenden Erfindung, die Wartung einer gattungsgemäßen Legevorrichtung zu verbessern.

Die Aufgabe wird gelöst wie im Gegenstand gemäß Anspruch 1 sowie durch einen Gegenstand gemäß Anspruch 13. Vorteilhafte Ausgestaltungen der Erfindung sind den auf den Anspruch 1 rückbezogenen Unteransprüchen sowie der nachfolgenden Beschreibung zu entnehmen.

Erfindungsgemäß ist vorgesehen, dass bei einer Legevorrichtung, die eine Verstellvorrichtung aufweist, durch die die insbesondere als Rüttelböden ausgebildeten Böden gemeinsam verstellbar ausgebildet sind, die Förderorgane als Becherriemen ausgebildet sind und der Kurzbodenbehälter einen Schöpfraum ausbildet. Die gemeinsame Verstellung, d. h. die Überführung der Rüttelböden aus der Geschlossenstellung in die Offenstellung oder umgekehrt ermöglicht eine einfachere Handhabung der Legevorrichtung. Anders als im Stand der Technik, bei dem die Rüttelböden einzeln geöffnet werden müssen, beispielsweise um Restbestände des zu legenden Guts aus dem Schöpfraum zu entfernen, ermöglicht die Verstellvorrichtung die gemeinsame, insbesondere gleichzeitige Betätigung der Rüttelböden. Neben der hiermit einhergehenden Zeitersparnis ist es insbesondere erleichtert, bei mehr als zwei Reihen von Legegut zu legenden Legevorrichtungen umständlich die von den Seiten versetzt zur Mitte hin angeordneten Förderorgane und Behälter zu entleeren. Die Öffnung der Rüttelböden oder deren Verschließen kann manuell oder durch einen maschinellen Antrieb, beispielweise auf Basis von einem oder mehreren Hydraulikzylindern oder einem oder mehreren gleichwirkenden, elektrischen Antrieben erfolgen.

Als Verstellvorrichtung kommen insbesondere gemeinsam betätigte, gleichwohl separat an den einzelnen Böden angeordnete Betätigungsmittel in Form von beispielsweise Hydraulik- oder Pneumatikzylindern in Frage. Besonders vorteilhaft, da vergleichsweise klein bauend und kostengünstig ausführbar, weist eine erfindungsgemäße Legevorrichtung gemäß einer Ausführungsform der Erfindung eine insbesondere einenends angetriebene Welle zur gemeinsamen Verschwenkung der Böden auf, wobei diese Welle vorzugsweise an den Behältern entlang läuft.Die Welle, die alternativ auch entlang der Innenseiten der Behälter und somit durch diese hindurch laufen kann, ist insbesondere außen an den Behältern entlang geführt und befindet sich bevorzugt im Bereich der Schwenkachsen der Böden, d.h. nicht weiter als 20 cm davon beabstandet, was für eine gemeinsame Verschwenkung von Welle und Böden vorteilhaft ist, da dann bei einem Verschwenken der Welle zumindest in etwa vom Boden gleiche Winkel überstrichen werden. Dies gilt für Varianten, bei denen die Schwenkachsen der Böden derjenigen der Welle entsprechen genauso wie für Schwenkachsen der Böden, die dicht an der Schwenkachse der Welle liegt.

Die Schwenklager der Böden können an der jeweiligen Behälterwand oder an einem Rahmen der Legevorrichtung oder der zugehörigen Legemaschine angeordnet sein. Ebenfalls liegt es im Rahmen der Erfindung, die Welle weiter als jeweils 20 cm entfernt von den Behältern anzuordnen, was insbesondere für Nachrüstlösungen vorteilhaft ist, wobei von der Welle angetriebene, den jeweiligen Behälterböden zugeordnete Übertragungsmittel die Verschwenkung der Welle auf die Böden übertragen.

Die Welle ist insbesondere endseitig angetrieben, wobei insbesondere eine manuelle Betätigung vorgesehen ist. Alternativ kann die Welle auch an einem der Enden der Welle oder auch zwischen den beiden Enden durch ein entsprechend motorisch bewegtes Stellmittel angetrieben werden. Die Verwendung einer gemeinsamen Welle führt zu einer schmal bauenden Verstellvorrichtung, die im Bereich der Überführung von Legegut aus dem Bunker in die Schöpfräume der Legevorrichtung angeordnet werden kann. Ein händischer Antrieb der Welle könnte auch in Fahrtrichtung betrachtet in der Mitte der Maschine erfolgen, sofern es einen entsprechenden Wartungsgang in der Maschine gibt, von dem aus ein zugehöriges Betätigungsorgan zugänglich ist.

Die Welle zur gemeinsamen Verschwenkung der Böden kann entweder direkt auf die Böden einwirken, dergestalt, dass die Böden an der Welle angelenkt und angeordnet sind, beispielsweise direkt daran befestigt sind. Sie können allerdings auch mittelbar über eine Betätigung der Welle bewegbar sein, indem beispielsweise die Verschwenkung der Welle mittels eines Arms, Lenkers und/oder Gestänges auf die Böden übertragbar ist.

Vorteilhafterweise ist einem jeweiligen Behälter ein insbesondere über die Welle schwenkbarer Arm zugeordnet, der zur Verschwenkung des Bodens ausgebildet ist, d.h. den Boden verschwenkend und/oder freigebend auf diesen einwirkt. Der Arm ist insbesondere in einer Draufsicht zumindest im Wesentlichen unterhalb des Bodens angeordnet und kann mit dem Boden fest verbunden sein. Besonders vorteilhaft ist allerdings für die Zwecke der vorliegenden Erfindung eine Ausbildung, in der der Arm den Boden einerseits berühren und bewegen kann, beispielsweise über einen am Arm angeordneten Dämpfer, wobei der Boden allerdings nicht fest mit dem Arm verbunden ist. Dies ist insbesondere vorteilhaft für Varianten, in denen eine Rüttelbewegung auf den Boden gebracht wird, die nicht über den Arm auf die Welle übertragen werden soll. In einer solchen Ausbildung kann der Arm während eines Rüttelvorgangs vom Boden beabstandet gehalten werden, so dass die Rüttelbewegung den Arm und die Welle nicht weiter beeinträchtigt. Auch die Nachrüstbarkeit ist in einem solchen Fall verbessert.

Vorzugsweise ist ein jeweils einem Boden zuzuordnender Arm durch einen einfachen oder einen Doppellenker ausgebildet. Generell ist unter einem Arm ein Bauteil zu verstehen, welches ein von der Welle übertragenes Drehmoment auf den jeweiligen Boden zwecks Verschwenkung desselben übertragen kann.

Anstelle über die Welle angetrieben zu werden, kann der Arm auch von einem eigenen Stellmittel bewegt werden und den Boden in seine Geschlossenposition überführen. Dies ist insbesondere für Varianten vorteilhaft, in denen die Verstellvorrichtung nicht mittels einer gemeinsamen Welle ausgebildet wird.

Die Verstellvorrichtung dient insbesondere zur Verstellung des Bodens aus der Offen- in die Geschlossenstellung und umgekehrt. Es handelt sich dabei nicht notwendigerweise um eine Vorrichtung, die zur Einbringung von Rüttelenergie ausgebildet ist. Gleichwohl können entsprechende Teile einer Rüttelvorrichtung auch Teile der Verstellvorrichtung sein, bzw. eine Rüttelvorrichtung kann auch durch die Verstellvorrichtung mit realisiert werden.

Vorteilhafterweise ist in einer Ausbildung der Erfindung mit einer Welle zumindest einer der Arme mittels einer in Längsrichtung auf der Welle variabel festlegbaren Befestigungsvorrichtung, insbesondere mittels einer verschiebbaren Hülse, befestigt. Die variable Feststellbarkeit aufgrund der Befestigungsvorrichtung ermöglicht die Anpassung der Verstellvorrichtung bei einer Anpassung des Abstandes der Förderorgane voneinander zwecks Änderung des Abstandes der Reihen des zu legenden Saatguts. Beispielsweise können die Arme entsprechend dem Abstand der Behälter jeweils über eine mit der Welle verstiftete oder verschraubte Hülse an der Welle festgelegt werden. Die Welle kann hierfür an verschiedenen Positionen entlang Ihrer Längsrichtung für einen Behälter unterschiedliche Ausnehmungen zur Aufnahme der Stifte oder Schrauben aufweisen.

In einer Ausbildung mit einer Hülse überträgt die Welle, die quer zur Hauptzug- bzw. Fahrtrichtung der Legevorrichtung und einer zugehörigen Legemaschine verläuft, im Betätigungsfall ein Drehmoment auf die auf ihr befindliche Hülse, die dieses an den mit der Hülse verbundenen Arm weiterleitet.

Für eine einfache Nachrüstbarkeit bereits bestehender gattungsgemäßer Vorrichtungen verschwenken Arme und Böden um unterschiedliche Achsen, mithin sind die Böden nicht fest an der Welle angeordnet und verschwenken nicht mit dieser, sondern können ihre aus dem Stand der Technik bekannte Lage behalten. Die Welle wird dann beispielsweise im Wege einer Nachrüstung separat am Rahmen oder Behälter lagernd entlang der Behälter verlaufend angeordnet.

Vorzugsweise wird die Welle dicht im Bereich der Schwenklager der Böden angeordnet, so dass die Verschwenkung der Böden und der Wellen über ähnliche Winkel erfolgen und eine Relativbewegung zwischen Arm und Boden möglichst minimiert wird. Dicht meint in diesem Fall innerhalb eines Abstands von 20 cm zum nächstgelegenen Schwenklager, wobei die Schwenkachse der Böden und der Welle nicht deckungsgleich sind.

Gemäß einer weiteren vorteilhaften Ausführung der Erfindung ist an dem Arm ein Zugelement angeordnet, welches mit einem Schließelement verbunden ist und welches insbesondere über eine Umlenkung zur Übersetzung einer Verschwenkung des Arms in eine translatorische Bewegung zur Betätigung des Schließelements ausgebildet ist. Die Verschwenkung der Welle und damit des Arms führt zur Betätigung des Zugelements, welche insbesondere für die Überführung des Bodens aus einer Geschlossenstellung in eine Offenstellung verwendet wird. Aufgrund der Übersetzung wird an dem Schließelement gezogen, wodurch sich dieses, beispielsweise in Form eines Stifts, aus einer Falle heraus bewegt. Vorzugsweise befinden sich das Schließelement und der Stift an einem der Schwenkachse des Bodens entgegengesetzten Ende desselben. Diese Ausbildung ist insbesondere für Ausführungsbeispiele relevant, in denen die Böden über Arme bewegt und/oder geführt werden können, die nicht fest mit den Böden verbunden sind. So kann ein erster Teil einer Verschwenkung der Arme zunächst zur Betätigung der jeweiligen Schließelemente und ein weiterer Teil zum Bewegen und/oder Führen der Böden verwendet werden. Bei einem Freigeben der Böden aus der Geschlossenstellung durch Öffnen der jeweiligen Schließelemente sowie Aufschwenken des Arms vom jeweiligen Boden können diese beispielsweise schwerkraftbedingt aufschwenken.

Die Umlenkung kann rahmenseitig oder behälterseitig angeordnet sein. Beispielsweise kann es sich bei der Umlenkung um einen zylinderförmigen Steg handeln, über den ein riemenartiges Zugelement geführt ist. Eine Verschwenkung des Arms relativ zum Boden, wenn die Umlenkung am Boden befestigt ist, kann dann je nach Position des nicht mit dem Boden befestigten Arms zu einer Relativbewegung des Zugelements, beispielsweise in Richtung einer Längsseite des Bodens und somit in Richtung eines Verschlusses des Bodens führen, wodurch das jeweilige Schließelement betätigbar ist. Die Betätigung des Schließelements erfolgt in einer Draufsicht vorzugsweise senkrecht zur Wellenachse.

Vorteilhafterweise ist die Welle mit einem Betätigungsorgan in Form eines vorzugsweise seitlichen Schwenkhebels und/oder eines Wellenantriebs versehen, wobei der Wellenantrieb mechanisch, motorisch und wie auch der Schwenkhebel nicht seitlich angeordnet sein kann. Ein Schwenkhebel ist insbesondere manuell betätigbar sein. Zur einfachen manuellen Betätigung durch das mit dem Bedienpersonal der Legemaschine bzw. Legevorrichtung ist das Betätigungsorgan allerdings an der Seite einer zugehörigen Legemaschine angeordnet, so dass die Welle zur gemeinsamen Verschwenkung der Böden von einer in Fahrtrichtung betrachtet neben der Legevorrichtung stehenden Person manuell betätigt werden kann.

Zur Definition gewünschter Stellungen des Betätigungsorgans ist insbesondere ein Positionsblech mit einer Mehrzahl von Aufnahmen vorgesehen, an oder in denen der das Betätigungsorgan, vorzugsweise ein Schwenkhebel, festlegbar ist. Als Positionsblech gelten auch nicht-blechartige Haltemittel für das Betätigungsorgan. Zur Festlegbarkeit des Bedienorgans können an dem Schwenkhebel entsprechende Fortsätze oder auch Bolzen, Schrauben oder Stickel vorhanden sein, die in diese Aufnahmen eingreifen können. Die Aufnahmen und damit die Stellungen des Betätigungsorgans und damit die Verschwenkung der Welle sind beispielsweise für eine Offenposition und eine Geschlossenposition des Bodens. Zur leichteren Führung des Betätigungsorgans und/oder zur zielgerichteten Bewegung desselben kann dieses zumindest ein Rückstell- bzw. Kraftspeicherelement aufweisen, die das Betätigungsorgan entweder in eine bestimmte Position überführen, wenn dieses losgelassen wird, oder die eine Bewegung des Betätigungsorgans in eine bestimmte Richtung unterstützen. Vorzugsweise wird dieses Kraftspeicherelement beispielsweise in Form einer Feder rahmenseitig oder behälterseitig angeordnet.

Vorzugsweise umfasst eine erfindungsgemäße Legevorrichtung in einer weiteren Ausbildung der Erfindung eine wenigstens einen Rüttelantrieb aufweisende Rüttelvorrichtung, die zur Rüttelbewegung der Böden in deren Geschlossenposition und relativ zu den Seitenwänden ausgebildet ist. Diese kann mechanisch an den Legeorganantrieb gekoppelt sein. Sie kann beispielsweise durch Einwirken auf die Welle oder einen anderen Teil der Legevorrichtung die Rüttelbewegung der Böden erzeugen. Insbesondere ist die durch beispielsweise ein Lochblech ausbildete Falle, in der das Schließelement angeordnet werden kann, mit ausgebildet. Das Lochblech befindet sich vorzugsweise am den Schwenklagern eines jeweiligen Bodens entgegengesetzten Ende desselben und kann durch den Rüttelantrieb sowie ein etwaiges Koppelgestänge bewegt werden.

Für Ausführungen der Erfindung, bei denen ein Rütteln der Böden nicht immer gewünscht ist, ist das Betätigungsorgan in eine Auskoppelstellung überführbar, in der der zumindest eine Rüttelantrieb von den Böden entkoppelt ist. Insbesondere verschwenkt das Betätigungsorgan die Welle ausgehend von einer Offenstellung der Böden über eine Geschlossenstellung in eine Auskoppelstellung, indem ein Koppelgestänge der Rüttelvorrichtung außer Eingriff mit dem Rüttelantrieb gebracht wird. Vorzugsweise ist ein jeweiliger Boden eines Behälters in der Auskoppelstellung den Schöpfraum verkleinernd zwischen zwei Seitenwänden des Behälters verschwenkt positioniert, wobei insbesondere ein an der Welle befestigter Arm den Boden in dieser Position hält. Durch ein Verschwenken des Bodens und eines mit diesem verbundenen Hebel des Koppelgestänges gelangt aufgrund eines Hebellagers des Koppelgestänges der Hebel desselben mit dem Rüttelantrieb außer Eingriff. Beispielsweise ist der Hebel mit dem Lochblech fest verbunden, welches in der Geschlossenstellung wiederum mit dem Schließelement des Bodens mitbewegt wird.

Die Verstellvorrichtung weist neben der Offen- und Geschlossenstellung somit zumindest drei Positionen für das Bedienorgan und damit die Böden auf, die gleichzeitig von diesen eingenommen werden können, was die Bedienung der Legevorrichtung erheblich vereinfacht.

Die eingangs gestellte Aufgabe wird erfindungsgemäß ebenfalls durch eine Legemaschine für Hackfrüchte mit einem Bunker für das zu legende Gut gelöst, welche eine vor- oder nachbeschriebene erfindungsgemäße Legevorrichtung aufweist. Dieser Legemaschine kommen die Vorteile der erfindungsgemäßen Legevorrichtung zu Gute. Insbesondere für einen Bereich, in dem aus dem Bunker das zu legende Gut in die Schöpfräume der Legevorrichtung überführt wird, bietet sich die Verwendung einer Welle zur gemeinsamen Betätigung der Kurzbehälterbodenverstellung an, da diese platzsparend im Übergangsbereich bzw. auch unterhalb der Behälter der Legevorrichtung angeordnet werden kann, wobei sie endseitig durch leicht an einem Legemaschinenrahmen anzubringende Lager, beispielsweise in den rahmenseitig befestigten Positionsblechen, gelagert werden kann.

Weitere Vorteile und Einzelheiten der Erfindung sind der nachfolgenden Figurenbeschreibung zu entnehmen. Schematisch dargestellt zeigt:

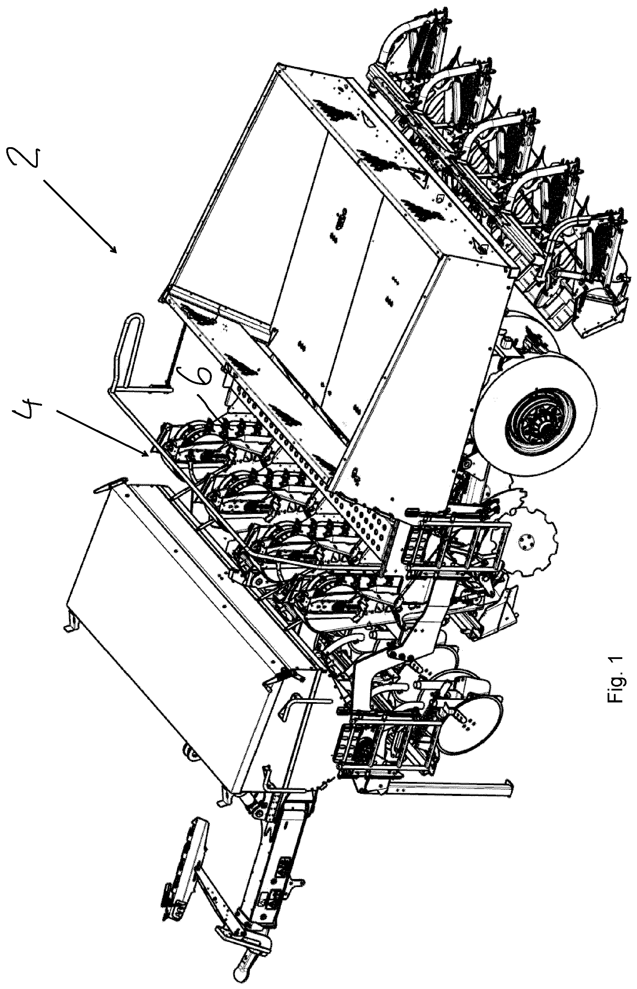

- Fig. 1: eine erfindungsgemäße Legemaschine in einer perspektivischen Darstellung,
- Fig. 2: eine erfindungsgemäße Legevorrichtung in einer Teilansicht,
- Fig. 3 bis 5: den Gegenstand nach Fig. 2 (teilweise) in einer Seitenansicht,
- Fig. 6: einen weiteren erfindungsgemäßen Gegenstand in einer teilweisen Seitenansicht,
- Fig. 7: einen Teil der erfindungsgemäßen Vorrichtung gemäß Fig. 2,
- Fig. 8: eine teilweise Ansicht des erfindungsgemäßen Gegenstandes nach Fig. 6,
- Fig. 9 bis 11: den Gegenstand nach den Fig. 3 bis 5 in einer reduzierten Seitenansicht,
- Fig. 12 und 13: den Gegenstand nach Fig. 6 in einer reduzierten Seitenansicht,
- Fig. 14 bis 17: weitere erfindungsgemäße Ausführungsbeispiele.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll sind funktional gleichwirkende Teile mit identischen Bezugsziffern versehen.

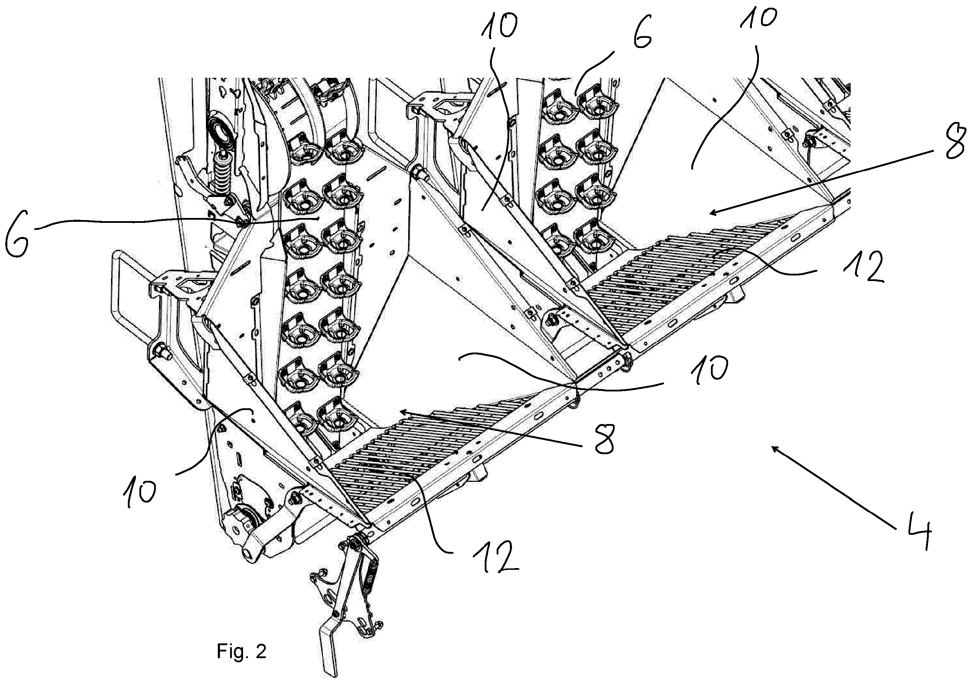

Eine erfindungsgemäße Legemaschine 2 ist vorliegend als Legemaschine für Kartoffeln ausgebildet. Die Legevorrichtung 4 der Legemaschine 2 umfasst vier Förderorgane 6 (vgl. Fig. 2), die zum Legen von vier Reihen Kartoffeln vorgesehen sind. Die Förderorgane 6 sind als Becherriemen ausgebildet. Jedem Förderorgan ist ein Behälter in Form eines Kurzbodenbehälters zugeordnet, der einen Schöpfraum 8 ausbildet und der einseitig von dem Förderorgan 6 begrenzt ist. Weiterhin ist der Schöpfraum von Seitenwänden 10 und einem Boden 12 begrenzt. Vorliegend sind die Böden 12 als Gitterrost ausgebildet. In alternativen Varianten können die Böden 12 auch durch ein Blechelement ausgebildet werden. Die Böden der nachfolgenden Ausführungsbeispiele sind als Rüttelböden ausgebildet mit entweder mechanischer oder elektrischer Rüttelvorrichtung. Ebenfalls ist eine hydraulische Rüttelvorrichtung denkbar. Allgemein können die Böden 12 in Varianten auch ohne Rüttelantrieb als Blechelement mit oder ohne Ausnehmungen ausgebildet sein.

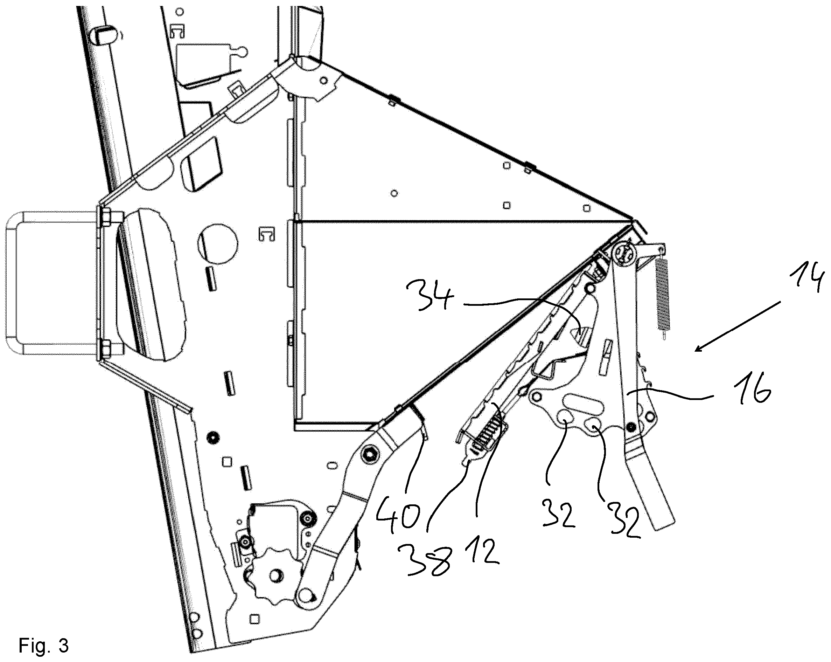

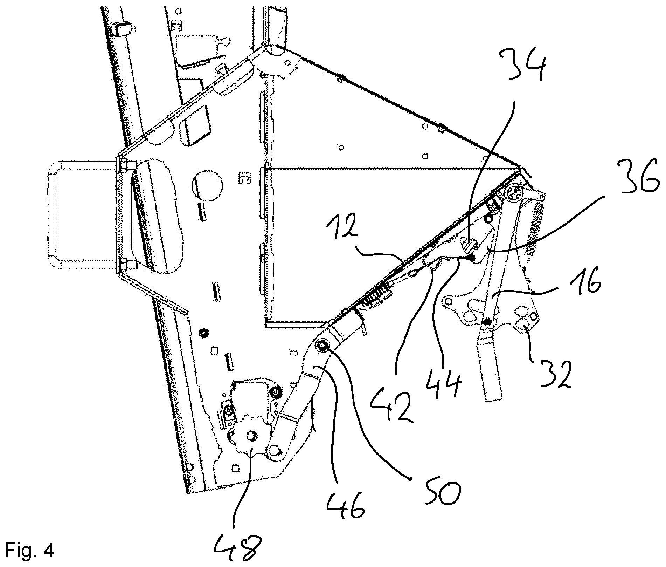

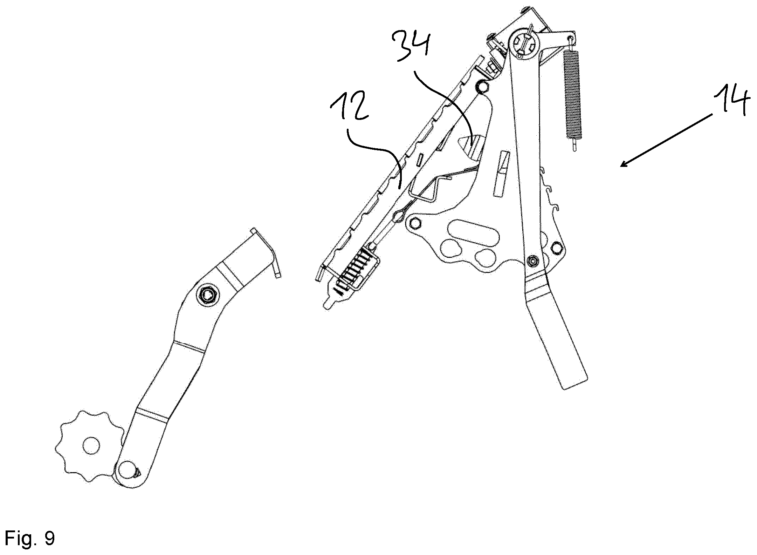

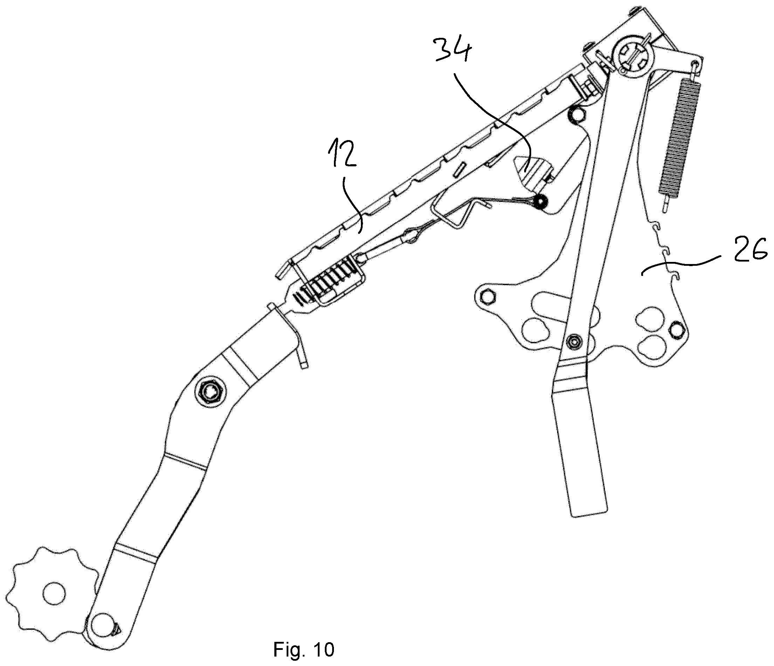

Die Böden 12 sind mittels einer Verstellvorrichtung 14 (Fig. 3) aus einer Geschlossenstellung (Fig. 3 und 9) in eine Offenstellung (Fig. 4 und 10) überführbar.

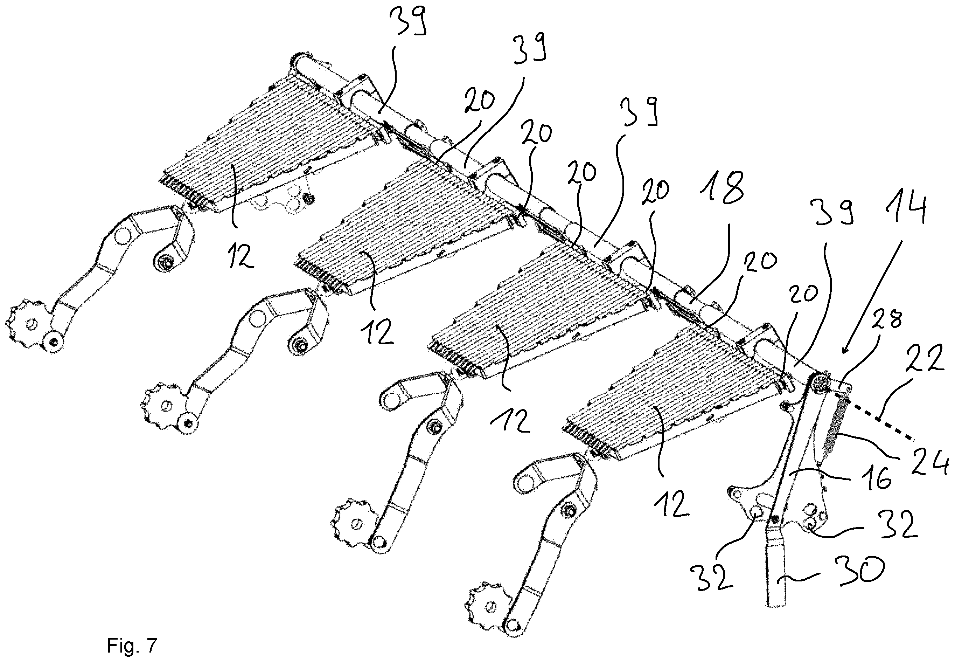

Die Verstellvorrichtung 14 weist ein Betätigungsorgan 16 in Form eines Schwenkhebels auf, der auf einer Welle 18 befestigt ist (Fig. 3, 7 und 8).

Die Böden 12 sind über Gummilager 20 schwenkbar gelagert. Die Schwenkachse der Böden 12 wird durch die Ausbildung der Gummilager 20 bestimmt. Diese Schwenkachse der Böden 12 verläuft parallel zur Schwenkachse 22 der Welle 18, die mittels des Betätigungsorgans 16 verschwenkt wird. Das Betätigungsorgan 16 in Form des seitlichen Schwenkhebels ist somit dazu ausgebildet, alle vier Böden 12 gemeinsam zu verschwenken. Ein Kraftspeicherelement 24 dient der Beeinflussung der Schwenkbewegung dahingehend. Es ist einenends an einem Positionsblech 26 und anderenends an einem Teil 28 des Betätigungsorgans 16 befestigt ist. Durch Verwendung eines oder mehrerer Kraftspeicherelemente 24 können einzelne Positionen des Betätigungsorgans zwangsgeführt angesteuert werden, wenn der das Betätigungsorgan Bedienende dieses loslässt. Aus Gründen der Einfachheit sind in den Figuren einzelne Kraftspeicherorgane 24 nicht in ihrer gedehnten Stellung an dem Positionsblech 26 angeordnet gezeichnet.

Zur Betätigung des Betätigungsorgans 16 kann dieses in den gezeigten Varianten in Längsrichtung der Achse 22, d.h. quer zur Fahrtrichtung an einen Griff 30 aus einer der Aufnahmen 32 herausgezogen werden, da es sich um ein in sich leicht biegsames Betätigungsorgan 16 handelt. Nach dem Lösen aus einer der Aufnahmen wird es dann um die Schwenkachse 22 verschwenkt und anschließend in eine der anderen Aufnahmen 32 festgelegt. Anstelle einer gewissen Flexibilität des als Schwenkhebel ausgebildeten Betätigungsorgans 16 in Richtung quer zu dessen Längserstreckung kann alternativ auch ein beweglicher Bolzen zum Einführen in die Aufnahmen 32 verwendet werden, welche dann relativ beweglich zum Betätigungsorgan 16 auszubilden wären. Der in die Aufnahmen 32 einzuführende Teil des Betätigungsorgans 16 kann hinterschnitten ausgebildet sein, so dass durch eine durch das gespannte Kraftspeicherelement 24 ausgeübte Kraft das hinterschnittene Teil in einem sich verjüngenden Bereich der Ausnahmen 32 gesichert ist.

Je nach Positionierung des Betätigungsorgans 16 in einer der Aufnahmen 32 ergibt sich eine andere Stellung des Bodens 12. In einer in Fig. 3 gezeigten Position befindet sich der Schwenkhebel in einer in der Fig. 3 rechten Position. Ein mit einem Puffer 34 versehener Arm 36 (u.a. Fig. 4 bis 6), der über eine Hülse 39 auf der Welle 18 drehfest verbunden ist, hat den Boden 12 freigegeben, so dass dieser zur Entfernung von im Schöpfraum 8 befindlichen Gut maximal und schwerkraftbedingt geöffnet ist. Die Hülse 39 bildet mit den zugehörigen Festlegungsmitteln und den Bereichen der Welle, in denen diese Festlegungsmittel eingreifen, die Befestigungsvorrichtung für die an der Hülse fest angeordneten Arme 36 aus.

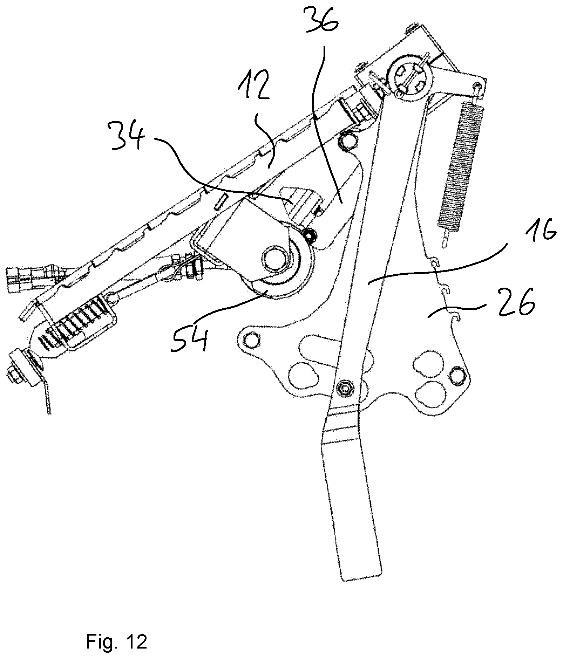

Ein Verschwenken des Bedienorgans 16 im Uhrzeigersinn um die Schwenkachse 22 der Welle 18 führt dazu, dass der jeweilige Arm 36 mit dem Puffer 34 gegen den jeweiligen Boden 12 drückt und die Böden 12 in die in den Fig. 4, 7, 8, 10 und 12 dargestellte Position verbringt. In dieser Position ist der jeweilige Boden 12 mittels einer Verschlussvorrichtung gesichert.

Die Verschlussvorrichtung umfasst ein auf Seiten des Bodens 12 angeordnetes Schließelement 38, welches endseitig einen Schließzapfen aufweist, der in einer Ausnehmung eines jeweiligen Lochblechs 40 eingreift. Diese Lochbleche 40 sind an ihren in den Fig. 3, 4 und 5 gezeigten unteren Enden leicht abgeschrägt, um ein Einlaufen des jeweiligen Schließelements bzw. dessen Zapfens in das Loch des Lochblechs zu verbessern. Um die Böden 12 frei rütteln zu können, wird der Schwenkhebel 16 bzw. das Betätigungsorgan 16 nach der Überführung der Schließelemente in die Lochbleche 40 etwas gegen den Uhrzeigersinn in die in der Fig. 4 gezeigte Position zurückverschwenkt, so dass sich zwischen Boden 12 und Puffer 34 ein Abstand bildet und eine Rüttelbewegung der Böden 12 nicht auf die Welle 18 übertragen wird.

Ein Öffnen der Böden 12 erfolgt umgekehrt durch ein Verschwenken des Betätigungsorgans 16 gegen den Uhrzeigersinn um die Schwenkachse 22, wobei aufgrund einer Umlenkung 42 ein Zugelement 44 an dem Schließelement 38 des jeweiligen Bodens 12 zieht und dieses aus der Eingriffsstellung in dem Lochblech 40 herauszieht (Fig. 3 und 9). Das jeweilige Schließelement 38 zählt als Teil des Bodens 12.

In der Geschlossenstellung gemäß der Fig. 4, 7, 8, 10 und 12 wird der jeweilige, schräg zum Förderorgan hin abfallende Boden 12 an seinem unteren Ende dadurch bewegt, dass das Lochblech 40 mit dem Schließelement 38 über einen Hebel 46, der an seinem unteren Ende an einem Rüttelantrieb 48 in Form eines Sternrades anliegt, bewegt wird. Ein Rüttelantrieb 48 in Form eines auf einer Welle eines Förderorgans befindlichen Sternrads ist mechanisch mit dem Antrieb der Förderorgane 6 gekoppelt und durch die sternförmige Ausbildung wird die Rüttelbewegung aufgrund des im Hebellager 50 angelenkten und schwenkbar gelagerten Hebels 46 ausgelöst. Die Rüttelvorrichtung umfasst somit den Rüttelantrieb 48, den Hebel 46 und das hierdran befestigte Lochblech 40, welches als Falle für das Schließelement 38 dient.

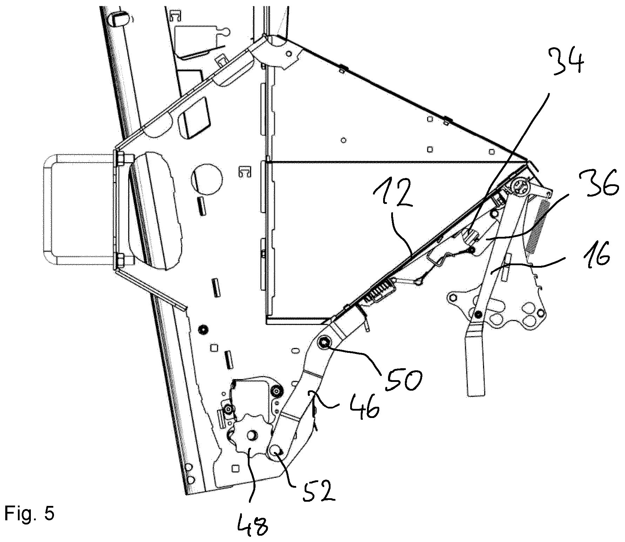

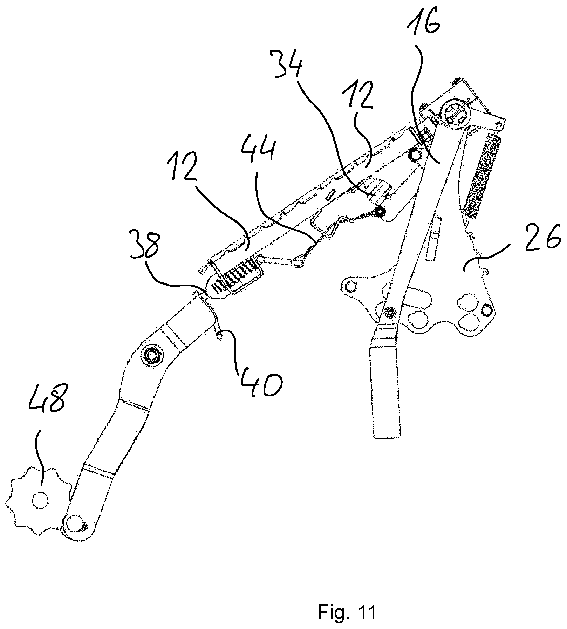

Um eine mechanische Entkopplung des Rüttelbodens 12 vom Rüttelantrieb zu bewirken, kann das Betätigungsorgan 16 in die in den Fig. 5 und 11 dargestellte Position überführt werden. In dieser Auskoppelstellung hebt der Puffer 34 die Rüttelboden 12 geringfügig gemäß der Darstellung in den Figuren in Richtung Uhrzeigersinn um deren Schwenkachse 22 an, so dass der Boden den Schöpfraum verkleinernd zwischen zwei Seitenwänden des Behälters positioniert ist. Durch das hiermit einhergehende Anheben des Lochblechs 40 verschwenkt der untere Teil des Hebels 46 um das Hebellager 50 gegen den Uhrzeigersinn und löst sein unteres Ende 52 wenige (in der Zeichnung nicht erkennbare) Millimeter soweit vom Rüttelantrieb 48 ab, dass keine Verbindung durch ein im Betrieb weiterhin mitlaufendes Sternrad erfolgt.

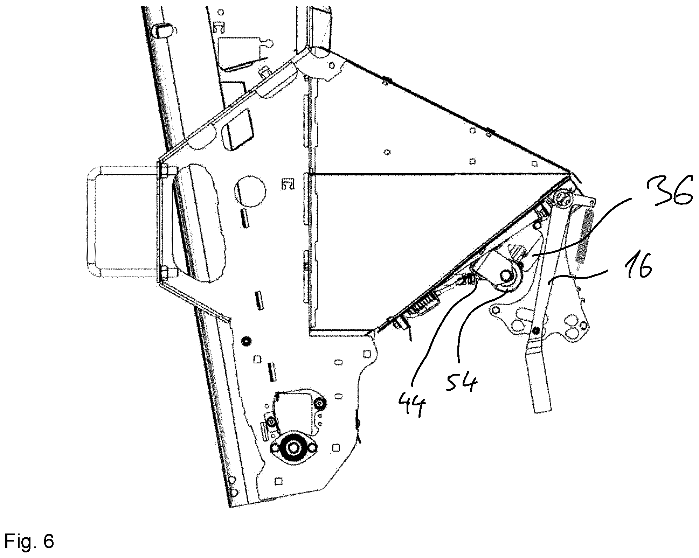

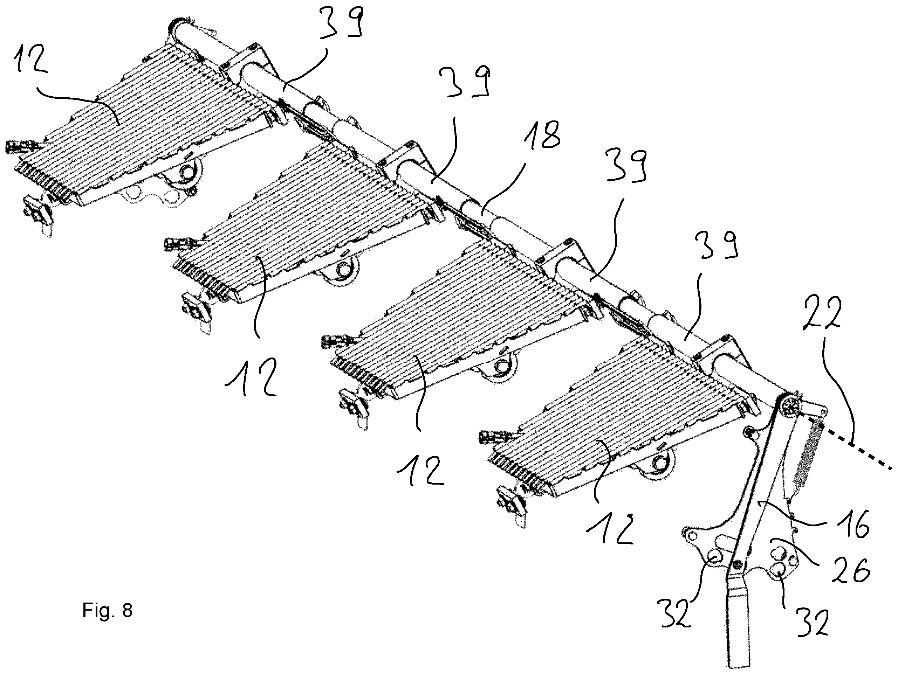

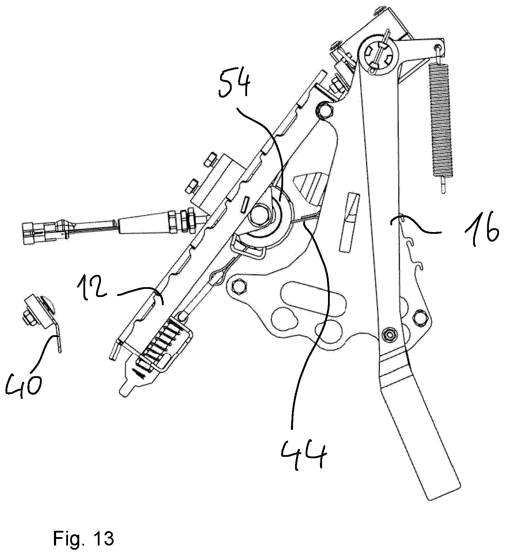

Anstelle eines dergestalt mechanischen Rüttelantriebs kann alternativ am Rüttelboden eine elektromotorisch angetriebene Unwuchtvorrichtung 54 angeordnet sein, die rotierend eine Rüttelbewegung aufgrund der beschleunigten Unwuchtmasse erzeugt (Fig. 6, 8, 13). Bei dieser Art der Rüttelvorrichtung wird die in Fig. 5 gezeigte Position des Betätigungselements 16 nicht benötigt. Ansonsten ist der Aufbau einer mit Unwuchtvorrichtungen 54 versehenen Legevorrichtung gemäß Fig. 8 im Wesentlichen identisch. Die Betätigung der Böden 12 erfolgt ebenfalls wieder mittels Betätigung der Welle 18 über einen jeweiligen Arm 36, an dem das Zugelement 44 befestigt ist (auf Fig. 13).

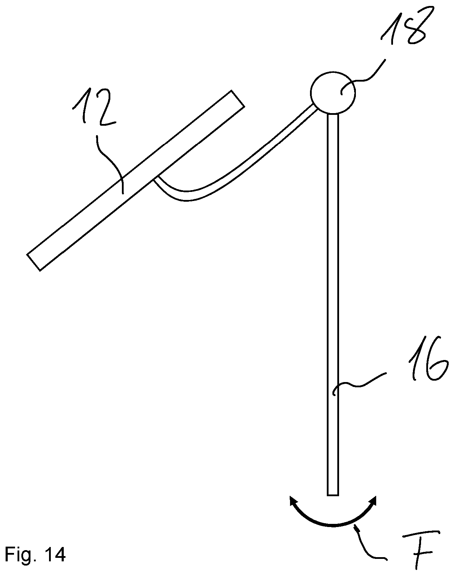

Weitere Varianten einer erfindungsgemäßen Vorrichtung sind in den Fig. 14 bis 17 beschrieben. In der Variante gemäß Fig. 14 sind die Böden 12 direkt an der Welle 18 befestigt, welche über das Betätigungsorgan 16, welches in die durch den Doppelpfeil F gekennzeichneten Richtungen bewegbar ist, bewegt werden können.

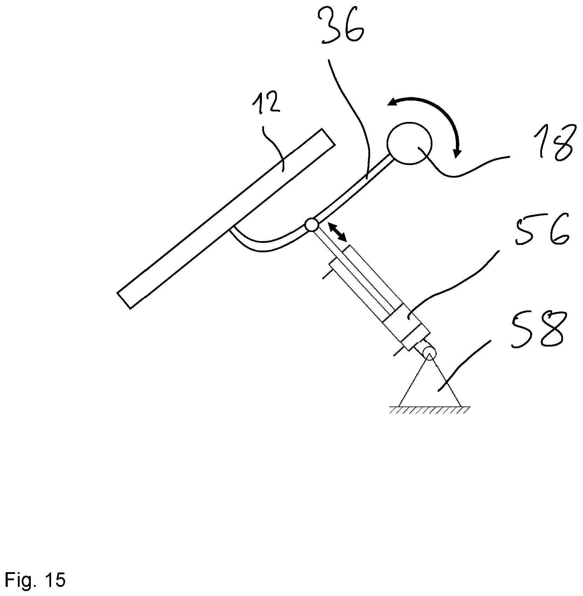

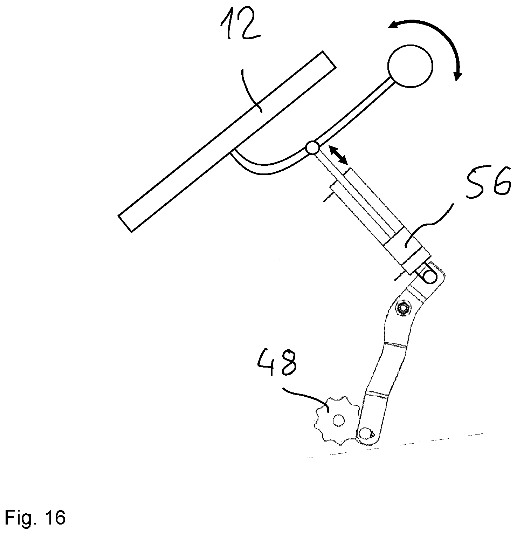

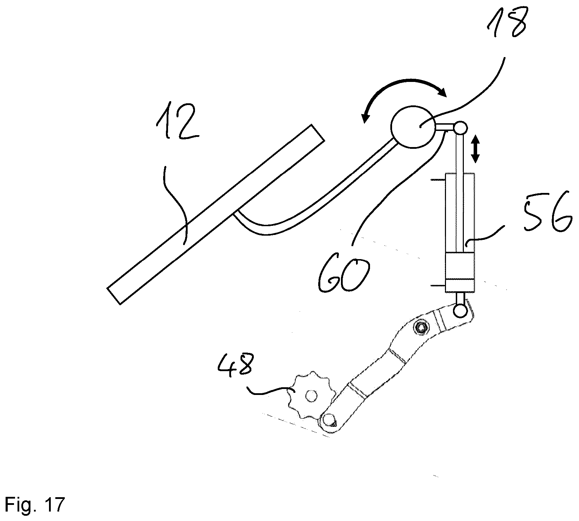

Im Ausführungsbeispiel nach der Fig. 15 sind die zentral an einer Welle 18 angeordneten Böden mittels eines als Hydraulikzylinder ausgebildeten Betätigungsorgans 56 gehalten. Das Betätigungsorgan 56 ist gestellfest und rahmenseitig an einer Basis 58 angeordnet. Anstelle der gestellfesten Ausbildung des Betätigungsorgans 56 kann dieses auch über eine Vorrichtung analog der Rüttelvorrichtung nach dem Ausführungsbeispiel der Fig. 3 bis 5 mittels einer Rüttelbewegung beaufschlagt werden, so dass der Boden 12 hin und her bewegt werden kann (Fig. 16). In ähnlicher Weise kann die Variante gemäß der Fig. 17, in der das Betätigungsorgan 56 auf einen zusätzlichen Schwenkhebel 60 der Welle eingreift, bewegt werden.

## Patentansprüche

1. Legevorrichtung für eine Legemaschine (2) für Hackfrüchte, umfassend zumindest zwei im Betrieb umlaufende Förderorgane (6), sowie jeweils einen dem jeweiligen Förderorgan (6) zugeordneten Behälter in Form eines Kurzbodenbehälters, der einseitig von dem jeweiligen Förderorgan (6) begrenzt ist, wobei jeder Behälter einen Boden (12) sowie Seitenwände (10) aufweist und der jeweilige Boden (12) zumindest teilweise aus einer Geschlossenstellung in eine Offenstellung überführbar ist, und umfassend eine Verstellvorrichtung (14), durch die die insbesondere als Rüttelböden ausgebildeten Böden (12) gemeinsam verstellbar ausgebildet sind, wobei die Förderorgane als Becherriemen ausgebildet sind und der jeweilige Kurzbodenbehälter einen Schöpfraum ausbildet.

2. Legevorrichtung nach Anspruch 1, **gekennzeichnet durch** eine insbesondere einenends angetriebene Welle (18) zur gemeinsamen Verschwenkung der Böden (12), insbesondere wobei die Welle an den Behältern entlang läuft.

3. Legevorrichtung nach einem der vorherigen Ansprüche 1 oder 2, **dadurch gekennzeichnet, dass** einem jeweiligen Behälter ein insbesondere über die Welle (18) schwenkbarer Arm (36) zugeordnet ist, der zur Verschwenkung des Bodens (12) ausgebildet ist.

4. Legevorrichtung nach Anspruch 3, **dadurch gekennzeichnet, dass** zumindest einer der Arme (36) mittels einer in Längsrichtung auf der Welle (18) variabel festlegbaren Befestigungsvorrichtung, insbesondere mittels einer verschiebbaren Hülse (39), befestigt ist.

5. Legevorrichtung nach Anspruch 3 oder 4, **dadurch gekennzeichnet, dass** Arme (36) und Böden (12) um unterschiedliche Achsen verschwenken.

6. Legevorrichtung nach einem der Ansprüche 3 bis 5, **dadurch gekennzeichnet, dass** an dem Arm (36) ein Zugelement (44) angeordnet ist, welches mit einem Schließelement (38) verbunden ist und welches insbesondere über eine Umlenkung (42) zur Übersetzung einer Verschwenkung des Arms (36) in eine translatorische Bewegung zur Betätigung des Schließelements (38) ausgebildet ist.

7. Legevorrichtung nach einem der vorherigen Ansprüche 2 bis 6, **dadurch gekennzeichnet, dass** die Welle (18) mit einem Betätigungsorgan (16, 56) in Form eines vorzugsweise seitlichen Schwenkhebels und/oder eines Wellenantriebs versehen ist.

8. Legevorrichtung nach Anspruch 7, **gekennzeichnet durch** ein Positionsblech mit einer Mehrzahl von Aufnahmen (32), an oder in denen das Betätigungsorgan (16), insbesondere der Schwenkhebel, festlegbar ist.

9. Legevorrichtung nach Anspruch 8, **gekennzeichnet durch** zumindest ein am Betätigungsorgan (16) angeordnetes Kraftspeicherelement (24), durch welches eine Bewegung des Betätigungsorgans (16) beeinflusst ist.

10. Legevorrichtung nach einem der vorherigen Ansprüche, **dadurch gekennzeichnet, dass** die Legevorrichtung (4) eine wenigstens einen Rüttelantrieb (48) aufweisende Rüttelvorrichtung umfasst, die zur rüttelnden Bewegung der Böden (12) in deren Geschlossenposition und relativ zu den Seitenwänden ausgebildet ist.

11. Legevorrichtung nach Anspruch 9 und 10, **dadurch gekennzeichnet, dass** das Betätigungsorgan (16) in eine Auskoppelstellung überführbar ist, in der der zumindest eine Rüttelantrieb (48) von den Böden (12) entkoppelt ist.

12. Legevorrichtung nach Anspruch 11, **dadurch gekennzeichnet, dass** ein jeweiliger Boden (12) in der Auskoppelstellung den Schöpfraum (8) verkleinernd zwischen zwei Seitenwänden (10) des Behälters verschwenkt positioniert ist, wobei aufgrund eines Hebellagers (50) des Koppelgestänges ein mit dem jeweiligen Boden (12) form- oder kraftschlüssig verbundener Hebel (46) des Koppelgestänges mit dem Rüttelantrieb (48) außer Eingriff ist.

13. Legemaschine für Hackfrüchte mit einem Bunker für das zu legende Gut, **gekennzeichnet durch** eine Legevorrichtung (4) nach einem der vorherigen Ansprüche.

## Claims

1. Planting device for a planting machine (2) for root crops, comprising at least two conveyor members (6) which rotate in operation, as well as a respective container associated with each of the respective conveyor members (6) in the form of a short-bottom container which is bounded on one side by the respective conveyor member (6) wherein each container has a bottom (12) and side walls (10) and the respective bottom (12) can be transferred at least partially from a closed position into an open position, and comprising an adjusting device (14) by means of which the bottoms (12), which are designed in particular as vibrating bottoms, are designed to be jointly adjustable, wherein the conveyor members are designed as bucket belts and the respective short-bottom container forms a scooping space.

2. Planting device according to claim 1, **characterized by** a shaft (18), driven in particular at one end, for pivoting the bottoms (12) jointly, in particular wherein the shaft runs along the containers.

3. Planting device according to one of the preceding claims 1 or 2, **characterized in that** an arm (36), which is pivotable in particular via the shaft (18), is assigned to a respective container and is designed to pivot the bottom (12).

4. Planting device according to claim 3, **characterized in that** at least one of the arms (36) is fastened via a fastening device which can be variably fixed on the shaft (18) in the longitudinal direction in particular via a displaceable sleeve (39).

5. Planting device according to claim 3 or 4, **characterized in that** arms (36) and bottoms (12) pivot about different axes.

6. Planting device according to one of claims 3 to 5, **characterized in that** a pulling element (44) is arranged on the arm (36), which is connected to a closing element (38) and which is designed in particular via a deflection (42) for translating a pivoting movement of the arm (36) into a translatory movement for actuating the closing element (38).

7. Planting device according to one of the preceding claims 2 to 6, **characterized in that** the shaft (18) is provided with an actuating member (16, 56) in the form of a preferably lateral pivoting lever and/or a shaft drive.

8. Planting device according to claim 7, **characterized by** a positioning plate with a plurality of receptacles (32) on or in which the actuating member (16), in particular the pivoting lever, can be fixed.

9. Planting device according to claim 8, **characterized by** at least one force storage element (24) arranged on the actuating member (16), by means of which a movement of the actuating member (16) is affected.

10. Planting device according to one of the preceding claims, **characterized in that** the planting device (4) comprises a vibrating device having at least one vibrating drive (48), which is designed for the vibrating movement of the bottoms (12) in their closed position and relative to the side walls.

11. Planting device according to claims 9 and 10, **characterized in that** the actuating member (16) can be transferred into a decoupling position in which the at least one vibrating drive (48) is decoupled from the bottoms (12).

12. Planting device according to claim 11, **characterized in that** a respective bottom (12) is positioned pivotally between two side walls (10) of the container in the uncoupling position, reducing the scooping space (8), wherein, due to a lever bearing (50) of the coupling linkage, a lever (46) of the coupling linkage which is positively or non-positively connected to the respective bottom (12) is disengaged from the vibrating drive (48).

13. Planting machine for root crops with a bunker for the crop to be planted, **characterized by** a planting device (4) according to one of the preceding claims.

## Revendications

1. Dispositif de plantation pour une machine à planter (2) pour des plantes sarclées, comprenant au moins deux organes de transport (6) qui tournent circulairement pendant le fonctionnement, ainsi qu'un récipient associé à chaque organe de transport (6) sous la forme d'un récipient à fond court, qui est délimité d'un côté par l'organe de transport (6) respectif, chaque récipient présentant un fond (12) et des parois latérales (10), le fond (12) respectif étant apte à être déplacé au moins partiellement d'une position fermée à une position ouverte, et comprenant un dispositif de réglage (14) grâce auquel les fonds (12), conçus en particulier sous la forme de fonds vibrants, sont aptes à être déplacés ensemble, les organes de transport étant conçus sous la forme de courroies à godets et le récipient à fond court respectif formant un espace de puisage.

2. Dispositif de plantation selon la revendication 1, **caractérisé par** un arbre (18) entraîné notamment à une extrémité pour le pivotement commun des fonds (12), l'arbre longeant notamment les récipients.

3. Dispositif de plantation selon l'une des revendications 1 ou 2 précédentes, **caractérisé en ce qu'**un bras (36) apte à pivoter notamment par l'intermédiaire de l'arbre (18) est associé à chaque récipient, lequel bras est conçu de façon à faire pivoter le fond (12).

4. Dispositif de plantation selon la revendication 3, **caractérisé en ce qu'**au moins un des bras (36) est fixé au moyen d'un dispositif de fixation apte à être fixé de manière variable dans le sens longitudinal sur l'arbre (18), en particulier au moyen d'un manchon coulissant (39).

5. Dispositif de plantation selon la revendication 3 ou la revendication 4, **caractérisé en ce que** les bras (36) et les fonds (12) pivotent autour d'axes différents.

6. Dispositif de plantation selon l'une des revendications 3 à 5, **caractérisé en ce qu'**un élément de traction (44) est agencé sur le bras (36), lequel est relié à un élément de fermeture (38) et est conçu, notamment par l'intermédiaire d'un renvoi (42), de façon à transformer un pivotement du bras (36) en un mouvement de translation pour actionner l'élément de fermeture (38).

7. Dispositif de plantation selon l'une des revendications 2 à 6, **caractérisé en ce que** l'arbre (18) est muni d'un organe d'actionnement (16, 56) sous la forme d'un levier pivotant, de préférence latéral, et/ou d'un système d'entraînement d'arbre.

8. Dispositif de plantation selon la revendication 7, **caractérisé par** une plaque de positionnement ayant une pluralité de logements (32) sur ou dans lesquels l'organe d'actionnement (16), en particulier le levier pivotant, est apte à être fixé.

9. Dispositif de plantation selon la revendication 8, **caractérisé par** au moins un élément (24) accumulateur d'énergie, agencé sur l'organe d'actionnement (16), par lequel un mouvement de l'organe d'actionnement (16) est influencé.

10. Dispositif de plantation selon l'une des revendications précédentes, **caractérisé en ce que** le dispositif de plantation (4) comprend un dispositif vibrant présentant au moins un système (48) d'entraînement vibrant, qui est conçu de façon à faire vibrer les fonds (12) dans leur position fermée et par rapport aux parois latérales.

11. Dispositif de plantation selon les revendications 9 et 10, **caractérisé en ce que** l'organe d'actionnement (16) est apte à être amené dans une position de découplage dans laquelle ledit au moins un système (48) d'entraînement vibrant est découplé des fonds (12).

12. Dispositif de plantation selon la revendication 11, **caractérisé en ce que** chaque fond (12) est positionné de manière pivotante entre deux parois latérales (10) du récipient en position de découplage, réduisant ainsi l'espace de puisage (8), un levier (46) de la tringlerie de couplage, relié par complémentarité de forme ou par adhérence au fond (12) respectif, étant désengagé du système (48) d'entraînement vibrant grâce à un palier de levier (50) de la tringlerie de couplage.

13. Machine à planter pour des plantes sarclées, comprenant une trémie pour les produits à planter, **caractérisée par** un dispositif de plantation (4) selon l'une des revendications précédentes.
